# EUROPÄISCHE PATENTSCHRIFT

(11) **EP 1 680 955 B1**
(45) Veröffentlichungstag und Bekanntmachung des Hinweises auf die Patenterteilung: **20.06.2007**
(21) Anmeldenummer: 05026643.6
(22) Anmeldetag: 06.12.2005
(51) Int. Cl.: A01K 1/015

(54) **Bodenbelagselement, insbesondere für einen Viehstallboden**
Floor covering element, especially for a cattle stable floor
Élément de revêtement de sols, notamment pour le sol d'une étable de bétail

(30) Priorität: 12.01.2005 DE 202005000420 U
(43) Veröffentlichungstag der Anmeldung: 19.07.2006
(73) Patentinhaber: Gummiwerk Kraiburg Elastik GmbH, 84529 Tittmoning (DE)
(72) Erfinder: Stadler, Reinhold, 84561 Mehring (DE); Steinberger, Rupert, 84570 Polling (DE); Stribl, Michael, 84550 Feichten/Alz (DE); Klinger, Martin, 84489 Burghausen (DE); Benz, Barbara, 84508 Hirten (DE)
(74) Vertreter: Ruttensperger, Bernhard

(56) Entgegenhaltungen:
- DE-A1- 3 402 046
- DE-U1- 29 619 473
- FR-A- 2 798 430
- GB-A- 2 240 251
- GB-A- 2 337 061

## Beschreibung

Die vorliegende Erfindung betrifft ein Bodenbelagselement zum Verlegen auf einem wenigstens eine vorzugsweise langgestreckte Aussparung aufweisenden Untergrund, insbesondere für einen Viehstall, umfassend eine Belagplatte aus elastisch verformbarem Material sowie wenigstens eine von der Belagplatte getrennt ausgebildete Befestigungseinheit, die zum Halten der Belagplatte an dem Untergrund in die Aussparung eingreifend positionierbar ist, gemäß dem Oberbegriff des Anspruchs 1.

Ein Bodenbelagselement für einen Viehstall ist aus der DE 101 24 797 A1 bekannt. Bei dieser bekannten Anordnung sind sowohl die Belagplatte als auch das bzw. die für diese Belagplatte vorgesehenen Befestigungselemente aus gummielastischem Material aufgebaut. Jedes Befestigungselement weist einen langgestreckten Haltebereich auf, mit welchem es in eine im Untergrund vorgesehene Aussparung so einsetzbar ist, dass es unter elastischer Kompression darin gehalten ist. In einem weiteren, kopfartigen Haltebereich ist im Haltezustand das bzw. jedes Befestigungselement in einer Ausnehmung der Belagplatte aufgenommen. Diese Ausnehmung ist mit über die Dicke der Belagplatte hinweg veränderter Profilierung ausgestaltet, so dass Halteabsätze gebildet sind, die von dem kopfartigen Haltebereich des Befestigungselements übergriffen werden können. Auf diese Art und Weise ist bei in eine Aussparung eingesetztem Befestigungselement und direkt zwischen diesem Befestigungselement und der Belagplatte hergestelltem Halteeingriff dann für eine stabile Halterung der Belagplatte am Untergrund gesorgt.

Der Vorgang zur Herstellung derartiger Belagplatten ist sehr aufwendig, da bei diesem Vorgang die Öffnung bzw. Öffnungen mit der angesprochenen konturierten Querschnittsprofilierung bereitgestellt werden müssen. Dies kann entweder beim Vulkanisiervorgang der Belagplatten selbst durch Einsatz eines entsprechenden Formkörpers erzeugt werden, oder kann in einem sehr aufwendig durchzuführenden nachfolgenden Bearbeitungsvorgang beispielsweise durch Fräsen erfolgen

Aus der GB-A-2 337 061 ist ein Stallboden bekannt, bei welchem ein Betonuntergrund mit langgestreckten Spalten und dazwischen verlaufenden Stegen ausgebildet ist. Auf den Stegen werden Gummiplattenelemente so festgelegt, dass sie bis an die Spalten heranreichen und somit auf Grund ihrer scheitelartigen Ausgestaltung in Richtung zu den Spalten hin verlaufende Oberflächenbereiche bereitstellen. Die einzelnen Gummiplatten werden durch Befestigungseinheiten auf dem Betonuntergrund festgelegt. Diese Befestigungseinheiten sind dübelartig ausgebildet. Ein aus Kunststoffmaterial aufgebautes flexibles Element weist einen flachen kopfartigen Bereich auf, der die Gummiplatten übergreift, und weist zwei abwärts stehende und in eine in den Betonuntergrund zu bohrende Öffnung einzuführende Schenkel auf. Durch den Haltekopfbereich hindurch ist ein Nagel geführt, welcher bei zwischen die beiden Schenkel eingreifender Positionierung diese nach radial außen aufspreizt, so dass sie gegen die Innenoberfläche der hierfür extra gebohrten Öffnung im Betonuntergrund gepresst werden.

Aus der DE 34 02 046 A1 ist ein aus Kunststoff aufgebautes, rostartiges Gitterelement bekannt, das an seiner Unterseite mit Rippen versehen ist. Diese werden als separate Bauteile bereitgestellt und mit dem Aufbaumaterial des rostartigen Gitterelements umgossen.

Die DE 296 19 473 U3 offenbart einen Stallbodenbelag, bei welchem Gummiplatten durch eine Vielzahl von Befestigungseinheiten an einem aus Betonmaterial mit einer Vielzahl von Spalten aufgebautem Untergrund festgelegt werden. Die zur Festlegung eingesetzten Klammern weisen einen die Gummimatten oben übergreifenden Kopfbereich und zwei nach unten abstehende Spreizschenkel auf. Diese werden in die Spalten im Untergrund eingreifend positioniert und durch das Ziehen eines Aufspreizelements zwischen diese hinein nach außen aufgespreizt.

Die GB-A-2 240 251 A offenbart einen Belag für einen Stallboden, bei welchem flexible Elemente unter Einsatz nietartiger Befestigungselemente an einem Untergrund festgelegt werden.

Es ist die Aufgabe der vorliegenden Erfindung, ein gattungsgemäßes Bodenbelagselement so weiter zu bilden, dass bei vereinfachter Herstellbarkeit gleichwohl eine gute Halterungswirkung für das Bodenbelagselement am Untergrund erzielt werden kann.

Erfindungsgemäß wird diese Aufgabe gelöst durch ein Bodenbelagselement mit den Merkmalen des Kennzeichenden Teiles des Anspruchs 1.

Dabei ist weiter vorgesehen, dass die wenigstens eine Befestigungseinheit ein erstes Befestigungselement umfasst, das mit einem ersten Haltebereich in die Aussparung eingreifend positioniert oder positionierbar ist, und ein von dem ersten Befestigungselement getrennt ausgebildetes zweites Befestigungselement umfasst, das mit einem zweiten Haltebereich in Halteeingriff mit der Belagplatte steht oder bringbar ist und in einem dritten Haltebereich in Halteeingriff mit einem vierten Haltebereich des ersten Befestigungselements steht.

Zur Festlegung am Untergrund vorgesehen ist, dass das erste Befestigungselement in seinem ersten Haltebereich langgestreckt ausgebildet ist und auf die Abmessung der Aussparung so abgestimmt ist, dass es unter Kompression in diese eingreifend positioniert oder positionierbar ist.

Bei dem erfindungsgemäßen Bodenbelagselement wird also die Haltewechselwirkung nicht direkt zwischen dem ersten Befestigungselement, das auch am Untergrund angreift, und der Belagplatte generiert, sondern diese Haltewechselwirkung ist indirekt unter Zwischenschaltung des zweiten Befestigungselements. Dieses ist in Haltewechselwirkung mit der Belagplatte, so dass diese deutlich einfacher herstellbar ist und nicht mehr so geformt sein muss, dass eine unmittelbare Haltewechselwirkung zwischen dieser und dem am Untergrund angreifenden ersten Befestigungselement erzeugt wird.

Um eine stabile Haltewirkung des ersten Befestigungselements am Untergrund erlangen zu können, wird vorgeschlagen, dass dieses mit elastisch verformbarem Material aufgebaut ist. Beispielsweise kann vorgesehen sein, dass das erste Befestigungselement oder/und die Belagplatte mit gummielastischem Material aufgebaut ist, vorzugsweise durch Recycling gewonnenem Gummingranulat. Durch den besonders vorteilhaften Einsatz von aus Recycling gewonnenem Gummigranulat wird einerseits ein deutlicher Kostenvorteil erlangt, andererseits können auf diese Art und Weise die gewünschten Elastizitätseigenschaften sichergestellt werden.

Um eine zuverlässige Kraftvermittlungsfuntion bereitstellen zu können, wird vorgeschlagen, dass das zweite Befestigungselement mit Hartmaterial aufgebaut ist. Beispielsweise kann das zweite Befestigungselement mit Hartkunststoff, wie z.B. Polypropylen, aufgebaut sein.

Eine zuverlässige Haltewechselwirkung zwischen den beiden Befestigungselementen kann dadurch erlangt werden, dass das erste Befestigungselement in seinem vierten Haltebereich wenigstens einen bezüglich des ersten Haltebereichs vorspringenden Haltevorsprung aufweist, welcher im Haltezustand einen Halteabsatz des dritten Haltebereichs des zweiten Befestigungselements übergreift. Es sei hier darauf hingewiesen, dass die beschriebene Anordnung mit direktem Kontakt zwischen den beiden Befestigungselementen auf Grund des einfachen, gleichwohl jedoch stabil wirkenden Aufbaus besonders bevorzugt ist. Selbstverständlich ist es auch möglich, den Halteeingriff zwischen den beiden Befestigungselementen unter Einsatz eines Kraft vermittelnden Elements zu erlangen, so dass kein direkter Kontakt zwischen den beiden Befestigungselementen besteht.

Um vor dem Zusammenfügen einer jeweiligen Befestigungseinheit mit der Belagplatte die jeweiligen Befestigungseinheiten als stabilen Verbund bereitstellen zu können, wird weiter vorgeschlagen, dass an dem ersten Befestigungselement in Zuordnung zu einem Haltevorsprung ein Rastbereich vorgesehen ist, welcher im Haltezustand einen Halteabsatz des zweiten Befestigungselements an einer vom Haltevorsprung abgewandten Seite übergreift.

Die Haltewechelwirkung zwischen dem zweiten Befestigungselement und der Belagplatte kann beispielsweise dadurch erlangt werden, dass das zweite Befestigungselement einen Körperbereich aufweist, mit welchem dieses in eine Öffnung der Belagplatte eingesetzt oder einsetzbar ist, und dass der zweite Haltebereich des zweiten Befestigungselements einen von dem Körperbereich sich weg erstreckenden Halterand umfasst. Dabei kann zur weiteren Erhöhung der Halterungsstabilität vorgesehen sein, dass der Körperbereich in die Öffnung der Belagplatte unter elastischer Verformung derselben eingesetzt oder einsetzbar ist.

Das ungewollte Loslösen einer Befestigungseinheit von der Belagplatte beispielsweise in einem Zustand, in welchem ein erfindungsgemäßes Bodenbelagselement noch nicht an einem Untergrund arretiert ist oder sich durch ungünstige Umstände vom Untergrund gelöst hat, zu verhindern, wird vorgeschlagen, dass an dem Körperbereich wenigstens ein Arretiervorsprung vorgesehen ist, welcher bei in die Öffnung der Belagplatte eingesetztem zweiten Befestigungselement widerhakenartig in das Material der Belagplatte eingreift.

Der Aufbau des zweiten Befestigungselements kann so sein, dass der Körperbereich des zweiten Befestigungselements im Wesentlichen topfartig ausgebildet ist und mit einem Bodenbereich den wenigstens einen Halteabsatz bereitstellt, wobei der Halterand sich von einer Umfangswand des Körperbereichs vorzugsweise vollständig um diese umlaufend nach außen erstreckt.

Da durch den Einsatz der aus mehreren Bauteilen aufgebauten erfindungsgemäßen Befestigungseinheit eine Profilierung bzw. Abstufung der bzw. jeder in der Belagplatte hierfür vorgesehenen Öffnung nicht erforderlich ist, wird vorgeschlagen, dass die Öffnung sich durch die gesamte Belagplatte hindurch mit im Wesentlichen gleichem Öffnungsquerschnitt erstreckt. Eine derartige Öffnung kann beim Herstellungsvorgang in sehr einfacher Art und Weise beispielsweise durch Wasserstrahlschneiden ohne komplizierte Schrägstellung des Wasserstrahlschneiders bezüglich der Belagplatte generiert werden.

Da bei dem erfindungsgemäßen Aufbau das zweite Befestigungselement mit seinem Halterand die Belagplatte in dem eine darin jeweils vorgesehene Öffnung umgebenden Bereich übergreift und somit beispielsweise auf der nach oben hin frei liegenden und durch Tiere begehbaren Oberseite aufliegt, wird zum Vermeiden von scharfkantigen Übergängen vorgeschlagen, dass der Halterand in Richtung vom Körperbereich weg eine abnehmende Dicke aufweist.

Die vorliegende Erfindung betrifft ferner einen Stallbodenbelag mit einer Mehrzahl von erfindungsgemäßen Bodenbelagselementen.

Weiter betrifft die vorliegende Erfindung einen Stallboden, welcher einen vorzugsweise aus Beton gefertigten Untergrund mit einer Mehrzahl von vorzugsweise langgestreckten Aussparungen und einen erfindungsgemäßen Stallbodenbelag aufweist.

Die vorliegende Erfindung wird nachfolgend mit Bezug auf die beiliegenden Zeichnungen detailliert beschrieben. Es zeigt:
- Fig. 1: eine Schnittdarstellung eines auf einem Untergrund ausgelegten erfindungsgemäßen Bodenbelagselements;
- Fig. 2: in perspektivischer Darstellung ein zweites Befestigungselement des in Fig. 1 gezeigten Bodenbelagselements;
- Fig. 3: das zweite Befestigungselement der Fig. 2 in Blickrichtung III In Fig. 2;
- Fig. 4: das zweite Befestigungselement der Fig. 2 in Blickrichtung IV in Fig. 2.

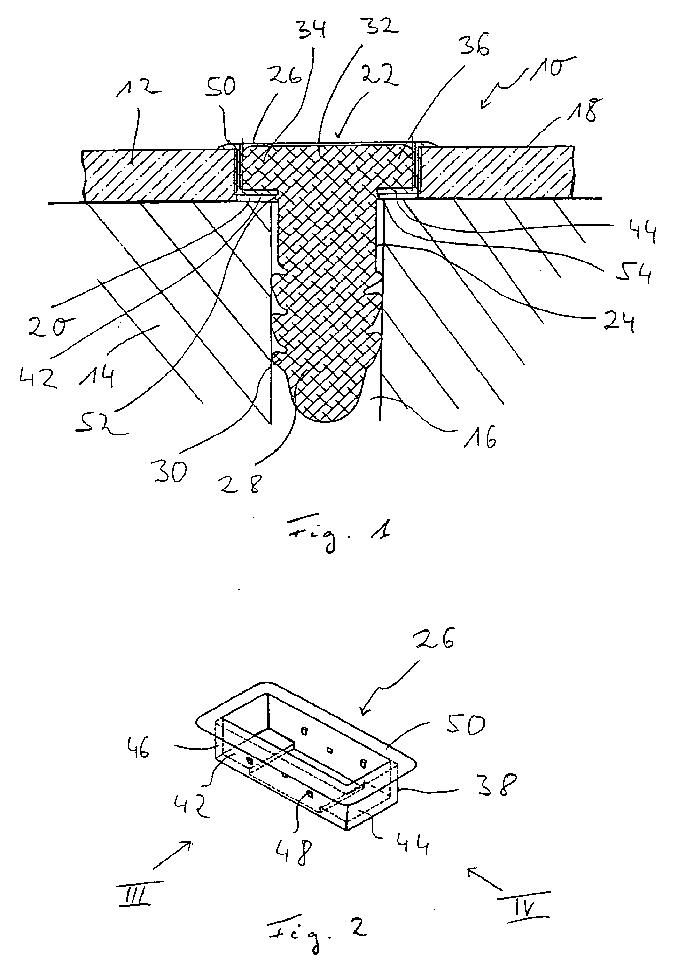

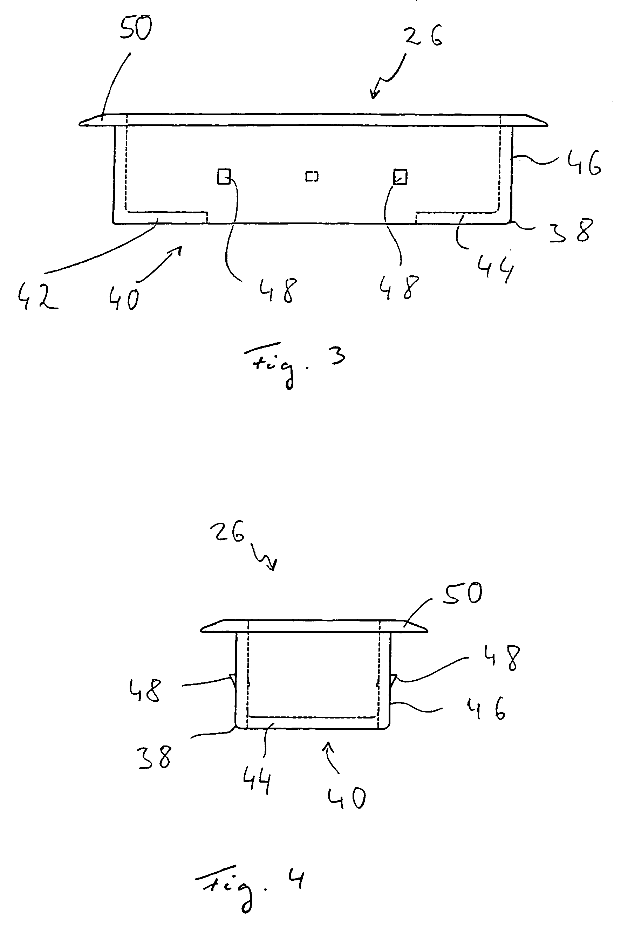

In Fig. 1 ist ein erfindungsgemäßes Bodenbelagselement für einen Stallbodenbelag allgemein mit 10 bezeichnet. Das Bodenbelagselement 10 umfasst eine Belagplatte 12, die im Einsatz als Stallbodenbelag auf einem festen Untergrund 14 aufliegt. Dieser feste Untergrund 14 ist im Allgemeinen aus Beton gefertigt und als so genannter Spaltenboden ausgeführt. Er weist eine Mehrzahl von im Wesentlichen langgestreckten Aussparungen 16 auf, über welchen entsprechend geformte Aussparungen der Belagplatte 12 liegen, um an der Oberseite 18 der Belagplatte 12 sich ansammelnde Verunreinigungen in einen unter dem Untergrund 14 liegenden Sammelbereich fallen zu lassen. Die Aussparungen in der Belagplatte 12 sind dabei bereichsweise unterbrochen oder kürzer bemessen, als die Aussparungen 16 im Untergrund 14. In diesen Bereichen sind in der Belagplatte 12 Öffnungen 20 ausgebildet, die beispielsweise in Draufsicht rechteckig geformt sind und mit im Wesentlichen gleichem Querschnitt durch die ganze Dicke der Belagplatte 12 hindurchlaufen. Dabei ist die Abmessung der Öffnungen 20 vorzugsweise derart, dass sie bei auf dem Untergrund 14 liegender Belagplatte 12 sich noch seitlich über die Aussparungen 16 des Untergrunds 14 hinaus erstrecken, wie dies in Fig. 1 auch erkennbar ist. In jede bzw. zumindest einen Teil der Öffnungen 20 ist jeweils eine Befestigungseinheit 22 eingesetzt. Diese Befestigungseinheiten 22 dienen dazu, die Belagplatte 12 am Untergrund 14 zu verankern, um beim Begehen durch Tiere oder beim Befahren mit Maschinen ein Abheben oder Verschieben der Belagplatten 12 zu verhindern. Die bzw. jede Befestigungseinheit 22 ist im dargestellten Beispiel mit zwei Befestigungselementen aufgebaut. Ein erstes Befestigungselement 24 ist in Halteeingriff mit dem Untergrund 14, während ein zweites Befestigungselement 26, das auch in Halteeingriff mit dem ersten Befestigungselement 24 steht, dann die Belagplatte 12 am Untergrund 14 hält. Der Aufbau einer derartigen Befestigungseinheit 22 wird nachfolgend auch mit Bezugnahme auf die Fig. 2 bis 4 näher erläutert.

Zunächst erkennt man in Fig. 1, dass das bzw. jedes erste Befestigungselement 24 in seitlicher Ansicht näherungsweise T-förmig ausgebildet ist. Ein im Haltezustand nach unten und in die Aussparung 16 sich erstreckender erster Haltebereich 28 des ersten Befestigungselements 24 ist langgestreckt und so dimensioniert, dass er auf Grund seiner Breite bei in die Aussparung 16 eingesetztem Befestigungselement 24 komprimiert ist und somit unter seiner eigenelastischen Vorspannung an den die Aussparung 16 begrenzenden Seitenwandungen des Untergrunds 14 anliegt. Dazu kann der erste Haltebereich 26 eine Mehrzahl von rippenartigen Vorsprüngen 30 aufweisen, die eine leichtere Verformbarkeit gewährleisten und die so geformt ist, dass sie auf Grund der zwischen dem Untergrund 14 und dem Haltebereich 28 generierten Haftreibung und ihrer Formgebung das erste Befestigungselement 24 widerhakenartig am Untergrund 14 gegen Herausziehen verspreizen.

Um dies erlangen zu können, ist das erste Befestigungselement 24 aus elastisch verformbarem Material, beispielsweise gummielastischem Material, aufgebaut. Hier hat sich besonders der Einsatz von Altgummigranulat als vorteilhaft erwiesen, das mit einem Bindemittel verbacken zu Platten geformt wird, aus welchen dann die jeweiligen ersten Befestigungselemente 24 mit nahezu beliebiger Form, beispielsweise durch Wasserstrahlschneiden, durch Ausstanzen oder sonstige Bearbeitungsvorgänge ausgeschnitten werden können. Auch für die Belagplatten 12 hat sich ein derartiges Altgummigranulat umfassendes Aufbaumaterial einerseits aus Kostengründen und andererseits Gründen der erforderlichen Stabilität und Elastizität besonders bewährt. Es ist selbstverständlich, dass sowohl für die Belagplatten 12 als auch die ersten Befestigungselemente 24 auch Neugummimaterial eingesetzt werden kann, also ein Material, das beim Herstellungsvorgang in seinem gesamten Volumenbereich zum ersten Mal vulkanisiert wird, wohingegen bei Einsatz von Altgummigranulat dieses bereits vulkanisiert ist und lediglich das die einzelnen Granulatpartikel aneinander bindende Haftmaterial beim Herstellungsvorgang durch Druck und Temperatur zum ersten Mal vulkanisiert und bzw. aushärtet.

In einem Kopfbereich 32 stellt das erste Befestigungselement 24 auf Grund seiner T-Form zwei seitlich über den ersten Haltebereich 28 hinaus vorspringende Haltevorsprünge 34, 36. Mit diesem Kopfbereich 32 bzw. den beiden Haltevorsprüngen 34, 36 ist im Haltezustand das erste Befestigungselement 24 im Wesentlichen vollständig im zweiten Befestigungselement 26 aufgenommen. Dieses weist, wie in Fig. 2 dargestellt, einen Körperbereich 38 mit im Wesentlichen topfartiger Gestalt auf. Ein Bodenbereich 40 dieses Körperbereichs 38 ist dabei im Wesentlichen in seinem Mittenbereich unterbrochen und stellt somit beidseits dieser Unterbrechung Halteabsätze 42, 44 bereit, über welchen im Haltezustand die beiden Haltevorsprünge 34 bzw. 36 des ersten Befestigungselements 24 liegen. Somit ist, betrachtet in Höhenrichtung, zwischen den beiden Haltevorsprüngen 34, 36 und den jeweils unter diesen liegenden Halteabsätzen 42, 44 eine fomrschlüssige Halterungswirkung generiert, so dass bei in die Aussparung 16 eingesetztem und darin gehaltenem ersten Haltebereich 30 auch das zweite Befestigungselement 26 bedingt durch den Halteeingriff zwischen den Haltevorsprüngen 34, 36 und den Halteabsätzen 42, 44 gegen eine Bewegung nach oben gesichert ist.

Das zweite Befestigungselement 26 weist anschließend an seinen Bodenbereich 40 ferner eine Umfangswand 46 auf. Der Körperbereich 38 ist so dimensioniert, dass er grundsätzlich zwar in Draufsicht mit dem Bodenbereich 40 und der Umfangswand 46 der Formgebung einer ihn aufnehmenden Öffnung 20 entspricht, aber zumindest in einer Richtung, also entweder der Längsrichtung oder der Querrichtung, größer bemessen ist, als die zugeordnete Öffnung 20. Beim Einsetzen des zweiten Befestigungselements 26 mit seinem Körperbereich 38 in eine Öffnung 20 wird somit die Belagplatte 12 auseinander gepresst, so dass im eingesetzten Zustand dann das Material der Belagplatte 12 auf Grund seiner Eigenelastizität und auf Grund seiner Neigung, in die Ausgangsform zurückzukehren, unter Druck an der Umfangswand 46 anliegt. Um diesen Verbund noch weiter zu stärken, sind an der Außenseite der Umfangswand 46 mehrere widerhakenartige Arretiervorsprünge 48 vorgesehen, die bei in die Öffnung 20 eingesetztem Körperbereich 38 in das umgebende Material der Belagplatte 12 eindringen und somit das zweite Befestigungselement 26 zusätzlich gegen ein Loslösen von der Belagplatte 12 sichern.

Am oberen Endbereich der Umfangswand 46 weist das zweite Befestigungselement 26 einen nach außen über die Umfangswand 46 vorspringenden und vorzugsweise vollständig entlang dieser umlaufenden Halterand 50 auf. Ist das zweite Befestigungselement 26 mit seinem Körperbereich 38 in eine Öffnung 20 der Belagplatte 12 eingesetzt, so übergreift die Umfangswand 50 als zweiter Haltebereich einer Befestigungseinheit 22 die Belagplatte 12 an ihrer Oberseite 18 an dem die Öffnung 20 umgebenden Bereich. Auf diese Art und Weise wird zusätzlich zu der bereits beschriebenen Haltewechelwirkung zwischen dem zweiten Befestigungselement 26 und der Belagplatte 12 in Höhenrichtung ein formschlüssig wirkender Halteeingriff zwischen diesem zweiten Befestigungselement 26 und der Belagplatte 12 generiert. Da ferner das zweite Befestigungselement 26 mit seinen Halteabsätzen 42, 44 als dritter Haltebereich in formschlüssigem Halteeingriff mit den Haltevorsprüngen 34, 36 des ersten Befestigungselements 24 als vierter Haltebereich steht und dieses in der Aussparung 16 durch Reibkraftschluss, ggf. aber auch bei entsprechender nach unten sich aufweitender Konturierung einer derartigen Aussparung 16 in Höhenrichtung in Formschlusseingriff mit dieser steht, wird eine stabile Halterung der Belagplatte 12 auf dem festen Untergrund 14 gewährleistet.

Man erkennt in der Fig. 1, dass der Halterand 50 des zweiten Befestigungselements 26 über der Oberseite 18 der Belagplatte 12 liegt und somit einen geringen Überstand bildet. Um hier scharfkantige Übergänge zu vermeiden, die einerseits beim Begehen durch Tiere zu Verletzungen führen könnten, und andererseits zu Beschädigungen des zweiten Befestigungselements 26 führen könnten, ist, wie in den Fig. 3 und 4 erkennbar, der Halterand 50 so geformt, dass er nach außen hin, also von der Umfangswand 46 weg, eine abnehmende Dicke aufweist und somit in Richtung zur Oberseite 18 der Belagplatte 12 hin abfällt. In den Übergangsbereichen kann der Halterand 50 zusätzlich abgerundet ausgebildet sein. Eine Beschädigung des zweiten Befestigungselements 26 beim Begehen oder Überfahren bzw. ein Loslösen des Halteeingriffs desselben mit der Belagplatte 12 kann weiter dadurch verhindert werden, dass das zweite Befestigungselement 26 bzw. jedes zweite Befestigungselement 22 aus Hartmaterial aufgebaut ist. Hier hat sich besonders Hartkunststoff, wie z.B. Polyprophylen, als vorteilhaft erwiesen. Grundsätzlich wäre es aber auch denkbar, hier aus Metall aufgebaute Teile zum Einsatz zu bringen. Da weiterhin beim Begehen bzw. Überfahren mit Arbeitsgerät die Belagplatte 12 lokal komprimiert wird und somit auch eine Absenkung in demjenigen Bereich, in dem ein zweites Befestigungselement 26 positioniert ist, auftreten kann, ist vorzugsweise weiter vorgesehen, dass nach unten hin das zweite Befestigungselement 26 die Öffnung 20 in der Belagplatte 12 nicht vollständig durchsetzt. Es bleibt also im unbelasteten Zustand zwischen dem zweiten Befestigungselement 26 und der Oberseite des Untergrunds 14 ein Zwischenraum, der bei einer lokalen Verformung der Belagplatte 12 gewährleistet, dass kein oder kein zu Beschädigungen führender Anlagekontakt zwischen dem zweiten Befestigungselement 26 und dem Untergrund 14 erzeugt wird.

Um einen stabilen Verbund der beiden im Wesentlichen eine Befestigungseinheit 22 bereitstellenden Befestigungselemente 24 und 26 sicherzustelllen, was vor allem in der Phase des Aufbaus eines Stallbodens vorteilhaft ist, erkennt man in Fig. 1 am ersten Befestigungselement 24 in Zuordnung zu den beiden Haltevorsprüngen 36 jeweilige Rastnasen 52, 54. Diese liegen nach unten hin in geringem Abstand zu den Haltevorsprüngen 34, 36, so dass im zusammengesetzten Zustand die beiden Halteabsätze 42, 44 in den zwischen den jeweiligen Haltevorsprüngen 34, 36 und den Ratsnasen 52, 54 gebildeten Zwischenraum eingreifen. Auf diese Art und Weise kann auch ein formschlüssiger Eingriff zwischen diesen beiden Befestigungselementen 24, 26 generiert werden. Dies könnte auch dadurch erlangt werden, dass das erste Befestigungselement 24 in seinem den Bodenbereich 40 durchsetzenden Bereich geringfügig größer dimensioniert ist, als die in dem Bodenbereich 40 vorgesehene Unterbrechung, so dass die beiden Halteabsätze 42, 44 zumindest unter Druck an den Seitenflächen des ersten Befestigungselements 24 anliegen oder ggf. sogar geringfügig in das Material des ersten Befestigungselements 24 eingedrückt sind.

Das erfindungsgemäße Bodenbelagselement 10 mit der Belagplatte 12 und den diese am Untergrund 14 haltenden Befestigungseinheiten 22 kann selbstverständlich in verschiedenster Weise variiert werden. So ist es selbstverständlich möglich, die Formgebung der bzw. jeder Öffnung 20 anders zu wählen, als beschrieben, wobei dann entsprechend auch die Formgebung der in eine jeweilige Öffnung 20 einzusetzenden zweiten Befestigungselemente 26 anzupassen ist. Auch die Formgebung der ersten Befestigungselemente 24 in ihrem Kopfbereich 32 ist daran anzupassen, da die Ausgestaltung dort vorzugsweise so gewählt ist, dass der Kopfbereich 32 den gesamten Innenraumbereich des topfartigen Körperbereichs 38 des zweiten Befestigungselements 26 ausfüllt, um das Auftreten von Spalten, in welchen sich Verunreinigungen ansammeln können, so weit als möglich zu vermeiden. Auch die Formgebung des ersten Haltebereichs 28 des ersten Befestigungselements 24 kann selbstverständlich auch in Anpassung an die Formgebung der Aussparungen 16 im Untergrund angepasst werden, ebenso wie die Länge des ersten Haltebereichs 28. Weiter sei darauf hingewiesen, dass selbstverständlich die Kraftvermittlungswirkung zwischen den beiden Befestigungselementen 24, 26 nicht so wie dargestellt und beschrieben direkt erfolgen muss. Es könnte ein weiteres Befestigungselement vorgesehen sein, das beispielsweise zwischen dem Kopfbereich 32 des ersten Befestigungselements 24 und dem Körperbereich 38 des zweiten Befestigungselements 26 eingesetzt ist und eine Kraftvermittlunsfunktion erfüllt. Dieses weitere Befestigungselement könnte beispielsweise auch eine Art Klebeverbindung zwischen den beiden Befestigungselementen 24 und 26 generieren. Auch ist es selbstverständlich, dass die vorangehend angesprochenen Materialien, also die elastischen Materialien für die Belagplatte 12 und das erste Befestigungselement 24 und das harte Material für das zweite Befestigungselement 26, nur besonders vorteilhafte Beispiele darstellen. Je nach auftretender Anforderung können auch hier andere Materialien gewählt werden.

## Patentansprüche

1. Bodenbelagselement zum Verlegen auf einem wenigstens eine vorzugsweise langgestreckte Aussparung (16) aufweisenden Untergrund (14), insbesondere für einen Viehstall, umfassend eine Belagplatte (12) aus elastisch verformbarem Material sowie wenigstens eine von der Belagplatte (12)getrennt ausgebildete Befestigungseinheit (22), die zum Halten der Belagplatte (12) an dem Untergrund (14) in die Aussparung (16) eingreifend positionierbar ist, wobei die wenigstens eine Befestigungseinheit (22) ein erstes Befestigungselement (24) umfasst, das mit einem langgestrecken erten Haltebereich (28) in die Aussparung (16) eingreifend positioniert oder positionierbar ist, und ein von dem ersten Befestigungselement (24) getrennt ausgebildetes zweites Befestigungselement (26) umfasst, das mit einem zweiten Haltebereich (50) in Halteeingriff mit der Belagplatte (12) steht oder bringbar ist und in einem dritten Haltebereich (42, 44) in Halteeingriff mit einem vierten Haltebereich (34, 36) des ersten Befestigungselements (24) steht,

2. Bodenbelagselement nach Anspruch 1,
**dadurch gekennzeichnet, dass** das erste Befestigungselement (24) mit elastisch verformbarem Material aufgebaut ist.

3. Bodenbelagselement nach Anspruch 1 oder 2,
**dadurch gekennzeichnet, dass** das erste Befestigungselement (24) oder/und die Belagplatte (12) mit gummielastischem Material aufgebaut ist, vorzugsweise durch Recycling gewonnenem Gummingranulat.

4. Bodenbelagselement nach einem der Ansprüche 1 bis 3,
**dadurch gekennzeichnet, dass** das zweite Befestigungselement (26) mit Hartmaterial aufgebaut ist.

5. Bodenbelagselement nach Anspruch 4,
**dadurch gekennzeichnet, dass** das zweite Befestigungselement (26) mit Hartkunststoff, vorzugsweise Polyprophylen, aufgebaut ist.

6. Bodenbelagselement nach einem der Ansprüche 1 bis 5,
**dadurch gekennzeichnet, dass** das erste Befestigungselement (24) in seinem vierten Haltebereich (34, 36) wenigstens einen bezüglich des ersten Haltebereichs (28) vorspringenden Haltevorsprung (34, 36) aufweist, welcher im Haltezustand einen Halteabsatz (42, 44) des dritten Haltebereichs des zweiten Befestigungselements (26) übergreift.

7. Bodenbelagselement nach Anspruch 6,
**dadurch gekennzeichnet, dass** an dem ersten Befestigungselement (24) in Zuordnung zu einem Haltevorsprung (34, 36) ein Rastbereich (52, 54) vorgesehen ist, welcher im Haltezustand einen Halteabsatz (42, 44) des zweiten Befestigungselements (26) an einer vom Haltevorsprung (34, 36) abgewandten Seite übergreift.

8. Bodenbelagselement nach einem der Ansprüche 1 bis 7,
**dadurch gekennzeichnet, dass** das zweite Befestigungselement (26) einen Körperbereich (38) aufweist, mit welchem dieses in eine Öffnung (20) der Belagplatte (12) eingesetzt oder einsetzbar ist, und dass der zweite Haltebereich (50) des zweiten Befestigungselements (26) einen von dem Körperbereich (38) sich weg erstreckenden Halterand (50) umfasst.

9. Bodenbelagselement nach Anspruch 8,
**dadurch gekennzeichnet, dass** der Körperbereich (38) in die Öffnung (20) der Belagplatte (12) unter elastischer Verformung derselben eingesetzt oder einsetzbar ist.

10. Bodenbelagselement nach Anspruch 8 oder 9,
**dadurch gekennzeichnet, dass** an dem Körperbereich (38) wenigstens ein Arretiervorsprung (48) vorgesehen ist, welcher bei in die Öffnung (20) der Belagplatte (12) eingesetztem zweiten Befestigungselement (26) widerhakenartig in das Material der Belagplatte (12) eingreift.

11. Bodenbelagselement nach einem der Ansprüche 8 bis 10, sofern auf Anspruch 6 oder Anspruch 7 rückbezogen,
**dadurch gekennzeichnet, dass** der Körperbereich (38) des zweiten Befestigungselements (26) im Wesentlichen topfartig ausgebildet ist und mit einem Bodenbereich (40) den wenigstens einen Halteabsatz (42, 44) bereitstellt, wobei der Halterand (50) sich von einer Umfangswand (46) des Körperbereichs (38) vorzugsweise vollständig um diese umlaufend nach außen erstreckt.

12. Bodenbelagselement nach einem der Ansprüche 8 bis 11,
**dadurch gekennzeichnet, dass** die Öffnung (20) sich durch die gesamte Belagplatte (12) hindurch mit im Wesentlichen gleichem Öffnungsquerschnitt erstreckt.

13. Bodenbelagselement nach einem der Ansprüche 8 bis 12,
**dadurch gekennzeichnet, dass** der Halterand (50) in Richtung vom Körperbereich (38) weg eine abnehmende Dicke aufweist.

14. Stallbodenbelag, umfassend eine Mehrzahl von Bodenbelagselementen (10) nach einem der Ansprüche 1 bis 13.

15. Stallboden, umfassend einen vorzugsweise aus Beton gefertigten Untergrund (14) mit einer Mehrzahl von vorzugsweise langgestreckten Aussparungen (16) sowie einen Stallbodenbelag nach Anspruch 14.

## Claims

1. Floor covering element for laying on a foundation (14) having at least one preferably elongate recess (16), in particular for a cattle stable, comprising a covering board (12) of resiliently deformable material and at least one fastening unit (22) which is formed separately from the covering board (12) and can be positioned in the recess (16) with an engaging action for retaining the covering board (12) on the foundation (14), wherein
the at least one fastening unit (22) comprises a first fastening element (24), which is or can be positioned in the recess (16) with an engaging action by way of an elongate first retaining region (28), and a second fastening element (26), which is formed separately from the first fastening element (24), is in or can be brought into retaining engagement with the covering board (12) by way of a second retaining region (50) and is in retaining engagement with a fourth retaining region (34, 36) of the first fastening element (24) in a third retaining region (42, 44),
**characterised in that** the first fastening element (24) is adapted in its first retaining region (28) to the dimensions of the recess (16) such that it is or can be positioned in this under compression with an engaging action.

2. Floor covering element according to Claim 1,
**characterised in that** the first fastening element (24) is constructed with resiliently deformable material.

3. Floor covering element according to Claim 1 or 2,
**characterised in that** the first fastening element (24) or/and the covering board (12) is/are constructed with elastometric material, preferably by recycling recovered rubber granular material.

4. Floor covering element according to any one of Claims 1 to 3,
**characterised in that** the second fastening element (26) is constructed with hard material.

5. Floor covering element according Claim 4,
**characterised in that** the second fastening element (26) is constructed with hard plastics material, preferably polypropylene.

6. Floor covering element according to any one of Claims 1 to 5,
**characterised in that**, in its fourth retaining region (34, 36), the first fastening element (24) has at least one retaining projection (34, 36) which projects in relation to the first retaining region (28) and, in the retaining state, engages over a retaining shoulder (42, 44) of the third retaining region of the second fastening element (26).

7. Floor covering element according to Claim 6,
**characterised in that** a locking region (52, 54) is provided on the first fastening element (24) in association with a retaining projection (34, 36), which region, in the retaining state, engages over a retaining shoulder (42, 44) of the second fastening element (26) on a side which is remote from the retaining projection (33, 36).

8. Floor covering element according to any one of Claims 1 to 7,
**characterised in that** the second fastening element (26) has a body region (38) by way of which this is or can be inserted in an opening (20) of the covering board (12), and that the second retaining region (50) of the second fastening element (26) comprises a retaining edge (50) which extends away from the body region (38).

9. Floor covering element according to Claim 8,
**characterised in that** the body region (38) is or can be inserted in the opening (20) of the covering board (12) while this undergoes resilient deformation.

10. Floor covering element according to Claim 8 or 9, **characterised in that** at least one arresting projection (48) is provided on the body region (38), which projection engages in the material of the covering board (12) like a barb when the second fastening element (26) is inserted in the opening (20) of the covering board (12).

11. Floor covering element according to any one of Claims 8 to 10, as far as these refer back to Claim 6 or Claim 7, **characterised in that** the body region (38) of the second fastening element (26) is formed substantially like a pot and, with a bottom region (40), provides the at least one retaining shoulder (42, 44), wherein the retaining edge (50) extends outwards from a circumferential wall (46) of the body region (38) such that it preferably passes around this completely.

12. Floor covering element according to any one of Claims 8 to 11,
**characterised in that** the opening (20) extends through the entire covering board (12) with a substantially uniform opening cross section.

13. Floor covering element according to any one of Claims 8 to 12,
**characterised in that** the retaining edge (50) is of a thickness which decreases in the direction away from the body region (38).

14. Stable floor covering, comprising a plurality of floor covering elements (10) according to any one of Claims 1 to 13.

15. Stable floor, comprising a foundation (14), which is preferably made of concrete and has a plurality of preferably elongate recesses (16), and a stable floor covering according to Claim 14.

## Revendications

1. Élément de revêtement de sol destiné à être posé sur une sous-couche (14) qui présente au moins un creux (16) de préférence allongé, en particulier pour une étable à bétail, comprenant une plaque de revêtement (12) en un matériau élastiquement déformable ainsi qu'au moins une unité de fixation (22) réalisée séparément de la plaque de revêtement (12) et susceptible d'être positionnée en engagement dans le creux (16) pour le maintien de la plaque de revêtement (12) sur la sous-couche (14), dans lequel ladite au moins une unité de fixation (22) comprend un premier élément de fixation (24) qui est positionné ou susceptible d'être positionné en engagement dans l'évidement (16) au moyen d'une première zone de maintien allongée (28), et un deuxième élément de fixation (26) réalisé séparément du premier élément de fixation (24), qui est ou peut être amené en engagement de maintien avec la plaque de revêtement (12) au moyen d'une deuxième zone de maintien (50) et qui est en engagement de maintien dans une troisième zone de maintien (42, 44) avec une quatrième zone de maintien (34, 36) du premier élément de fixation (24),
**caractérisé en ce que** le premier élément de fixation (24) est ajusté, dans sa première zone de maintien (28), aux dimensions du creux (16) de telle façon qu'il est positionné ou susceptible d'être positionné en engagement sous compression dans ce creux.

2. Élément de revêtement de sol selon la revendication 1,
**caractérisé en ce que** le premier élément de fixation (24) est réalisé avec un matériau élastiquement déformable.

3. Élément de revêtement de sol selon la revendication 1 ou 2,
**caractérisé en ce que** le premier élément de fixation (24) et/ou la plaque de revêtement (12) est réalisé en matériau présentant l'élasticité du caoutchouc, de préférence du granulé de caoutchouc récupéré par recyclage.

4. Élément de revêtement de sol selon l'une des revendications 1 à 3,
**caractérisé en ce que** le deuxième élément de fixation (26) est réalisé en matériau dur.

5. Élément de revêtement de sol selon la revendication 4,
**caractérisé en ce que** le deuxième élément de fixation (26) est réalisé en matière synthétique dure, de préférence en polypropylène.

6. Élément de revêtement de sol selon l'une des revendications 1 à 5,
**caractérisé en ce que** le premier élément de fixation (24) comporte, dans sa quatrième zone de maintien (34, 36), au moins une saillie de maintien (34, 36) qui fait saillie par rapport à la première zone de maintien (28) et qui, dans la situation de maintien, coiffe un talon de maintien (42, 44) de la troisième zone de maintien du deuxième élément de fixation (26).

7. Élément de revêtement de sol selon la revendication 6,
**caractérisé en ce que**, sur le premier élément de fixation (24) et en association à une saillie de maintien (34, 36), il est prévu une zone d'enclenchement (52, 54) qui, dans la situation de maintien, coiffe un talon de maintien (42, 44) du deuxième élément de fixation (26) sur un côté détourné de la saillie de maintien (34, 36).

8. Élément de revêtement de sol selon l'une des revendications 1 à 7,
**caractérisé en ce que** le deuxième élément de fixation (26) comprend une région de corps (38) au moyen de laquelle celui-ci est engagé ou susceptible d'être engagé dans une ouverture (20) de la plaque de revêtement (12), et **en ce que** la deuxième zone de maintien (50) du deuxième élément de fixation (26) comprend une bordure de maintien (50) qui s'étend en éloignement de la région de corps (38).

9. Élément de revêtement de sol selon la revendication 8,
**caractérisé en ce que** la région de corps (38) est mise en place ou susceptible d'être mise en place dans l'ouverture (20) de la plaque de revêtement (12) sous déformation élastique de celle-ci.

10. Élément de revêtement de sol selon la revendication 8 ou 9,
**caractérisé en ce qu'**il est prévu au moins une saillie d'arrêt (48) sur la région de corps (38), saillie qui s'engage à la manière d'un crochet dans le matériau de la plaque de revêtement (12) lorsque le deuxième élément de fixation (26) est mis en place dans l'ouverture (20) de la plaque de revêtement (12).

11. Élément de revêtement de sol selon l'une des revendications 8 à 10, prise en dépendance de la revendication 6 ou de la revendication 7,
**caractérisé en ce que** la région de corps (38) du deuxième élément de fixation (26) est réalisée essentiellement en forme de pot et comporte une région de fond (40) qui constitue au moins un talon de maintien (42, 44), et la bordure de maintien (50) s'étend vers l'extérieur depuis une paroi périphérique (46) de la région de corps (38), de préférence de manière à entourer entièrement celle-ci.

12. Élément de revêtement de sol selon l'une des revendications 8 à 11,
**caractérisé en ce que** l'ouverture (20) s'étend à travers toute la plaque de revêtement (12) en présentant essentiellement une section d'ouverture égale.

13. Élément de revêtement de sol selon l'une des revendications 8 à 12,
**caractérisé en ce que** la bordure de maintien (50) présente une épaisseur qui diminue dans une direction en éloignement de la région de corps (38).

14. Revêtement de sol d'étable, comprenant une pluralité d'éléments de revêtement de sol (10) selon l'une des revendications 1 à 13.

15. Sol d'étable, comprenant une sous-couche (14) produite de préférence en béton et présentant une pluralité d'évidements (16) de préférence allongés, ainsi qu'un revêtement de sol d'étable selon la revendication 14.
